# EUROPÄISCHE PATENTANMELDUNG

(11) **EP 0 583 663 A1**
(43) Veröffentlichungstag der Anmeldung: **23.02.1994**
(21) Anmeldenummer: 93112132.1
(22) Anmeldetag: 29.07.1993
(51) Int. Cl.: E06B 3/96, E06B 3/26, F16B 7/18, E06B 3/30, E04F 11/18

(54) **Rahmenverbund-System**

(30) Priorität: 05.08.1992 DE 4225917
(71) Anmelder: THYSSEN POLYMER GMBH, D-81671 München (DE)
(72) Erfinder: Pielmeier, Günter, D-94327 Bogen (DE)

(57) **Zusammenfassung**

Metallrahmen zur Herstellung von Kunststoff-Fenstern -Flügeln, -Geländern und dergl., bei dem einstückige aus Metall bestehende Stützelemente (1) mit Schraubkanal (1c) gleicher Art oder mit anderen Stützelementen (2) mit einer Durchführung für eine Schraube (3) recht-, spitz-, oder stumpfwinkelig derart miteinander verschraubbar sind, daß der Schraubenhals mit dem Schraubenkopf durch einen Querschnitt beliebiger Form und Abmessung geführt ist und im Schraubkanal des einstückigen Stützelementes endet und ein Kunststoffummantelung (4,5), Handlauf oder dergl. darauf geklipst oder geschoben sind.

## Beschreibung

Die Erfindung bezieht sich auf einen Metallrahmen zur Herstellung von Kunststoff-Fenstern, -Flügeln, -Türen, -Kasten- und Erkerfenstern, Geländern usw.

Kunststoff-Fenster sind bekannt, sie bestehen im wesentlichen aus einem aus Kunststoff-Hohlkammer-Profilen gefertigten Rahmenwerk mit in die Hohlkammern eingesetzten Armierungs-Profilen aus Metall, die mit den angrenzenden Kunststoff-Profilen verschraubt sind solche Kunststoffprofile zur Herstellung von z.B. Fensterrrahmen und Flügeln sind in verschiedenen Ausführungsformen bekannt. Sie werden auf Gehrung geschnitten und anschließend stumpf verschweißt. Die Festigkeit und Be-lastbarkeit dieser verschweißten Ecken hängt von den Profilquerschnitten und den Wanddicken dieser Kunststoffprofile ab. Solche Rahmenkonstruktionen sind z.B. aus dem DE-GM 87 14 076, DE-GM 90 07 174 und DE-GM 82 21 372.0 bekanntgeworden.

Um die Eckfestigkeit besonders bei kleinen Querschnitten zu erhöhen, werden teilweise zusätzlich Kunststoff-Eckteile in die Profilenden gesteckt und mitverschweißt. Dieses zusätzliche Material im Eckbereich erhöht die Eckenbruchfestigkeit der Schweißteile. Um die Längendurchbiegung der Kunststoffprofile zu reduzieren, werden die Armierungs-Profile aus Metall, z.B. aus Stahl oder Aluminium in die Hohlkammern eingeschoben. Diese Armierungen enden vor dem Gehrungsschnitt der Kunststoffprofile.

Rahmenkonstruktionen für z.B. Geländer werden vorwiegend in Metall gefertigt und mit einem Kunststoff-Handlauf versehen.

Aus Gründen der Formstabilität werden Kunststoffprofile dickwandig mit etwa 3 mm Außenwanddicke hergestellt und in mehrere Hohlkammern aufgeteilt. Aus diesen Profilen werden z.B. Fenster und Türen für den Außeneinsatz hergestellt. Die eingeschobene Armierung dient lediglich der Längenaussteifung, wobei die Armierung immer ein mehr oder weniger großes Spiel in der Hohlkammer aufweist, da die Hohlkammerprofile innenseitig nicht kalibriert werden können und somit in der inneren Abmessung relativ großen Schwankungen unterworfen sind.

Die zusätzlich verschweißten Eckverstärkungen, wie beispielsweise DE-GM 85 13 805.3, sind ein zusätzlicher Meh raufwand der akzeptiert werden muß, weil für solche Rah menkonstruktionen die Winkel- und Torsionssteifigkeit ein wesentlicher Funktionsfaktor ist.

Um die Winkel- und Torsionssteifigkeit bei Kunststoffrahmenteilen zu verbessern, werden Metalleckverstärkungen so eingesteckt, daß sie mit den Armierugnen eine formschlüssige Verbindung darstellen. Diese zusätzlichen Metall-Eckverstärkungen sind vom Arbeitsaufwand her, gleich mit dem von Kunststoffeckverstärkungen zu sehen, jedoch sehr unwirtschaftlich.

Hier setzt die Erfidnung ein.

Die Erfindung, wie sie in den Ansprüchen beschrieben ist, löst die Aufgabe, die Kunststoffprofile selbst zu vereinfachen, d.h. dünnere Wanddicken und einfachere Kammereinteilungen sowie eckstabile Rahmen herstellen zu können, die das erforderliche Maß an Winkel- und Torsionssteifigkeit aufweisen und die Recycling-Fähigkeit fertiger Konstruktionen zu erhöhen, indem die Rahmen leicht zerlegbar und in die unterschiedlichen Materialien getrennt werden können.

Die mit der Erfindung erzielten Vorteile liegen insbesondere in der wirtschaftlichen Herstellbarkeit der Kunststoff-Rahmenkonstruktionen und der Möglichkeit solche Rahmen für Fenster, Türen, Geländer oder auch Sprossenkonstruktionen in beliebigen Abmessungen stumpf oder auf Gehrung verschrauben zu können, sowie in der Stabilität solcher, auch komplizierter Konstruktionen, wie z.B. Kasten- und Erkerfenster usw.

Die Schrauben für die Eckverbindung werden in Länge und Durchmesser stets so dimensioniert, daß die für eine jeweilige Konstruktion erforderliche Stabilität, Winkelsteifigkeit und Verbindungssteifigkeit mit einfachen Mitteln gewährleistet wird.

Dabei ist es nicht Voraussetzung, daß die Verbindungsprofile die zur Ummantelung verwendeten Verkleigunsprofile, z.B. aus Kunststoff, in den Hohlkammern ausfüllt, sondern die Verschraubungsteile tragen selbständig und müssen nicht wie bisher am Umkleidungsprofil abgestützt sein.

Somit ist mit einem Profil ein wirtschaftlich herstellbarer selbsttragender Rahmen, wie auch ein Armierugnsprofil für die Aussteifung z.B. für Kunststoff-Profilkonstruktio-nen geschaffen, der auf einfache Art einem Recycling-Verfahren zugeführt werden kann.

Die Erfindung ist nachstehend anhand der in den Abbildungen dargestellten Ausführungsbeispiele erläutert:

Es zeigt:
- Fig. 1: die Explosionsdarstellung eines Rahmens,
- Fig. 2: die Explosionsdarstellung eines Geländes,
- Fig. 3 und 4: Ausführungsvarianten der Stützelemente.

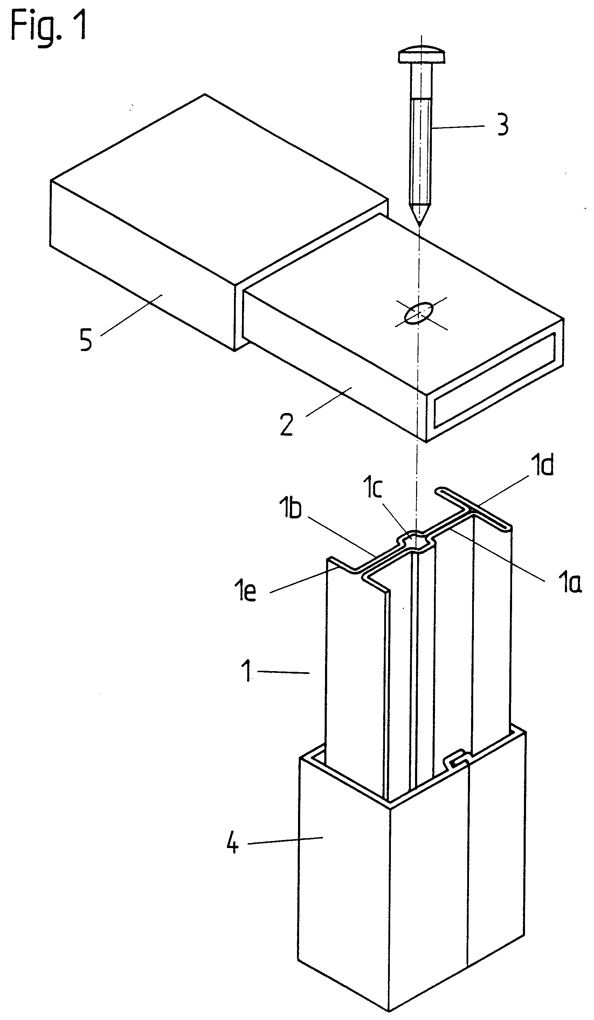

Die in der Fig. 1 gezeigte Rahmenkonstruktion besteht im wesentlichen aus einem einstückig ausgebildeten Stützelement 1 und einem weiteren Stützelement 2 gleicher oder beliebiger Ausbildung, die mittels eines Verbindungselementes, beispielsweise einer Schraube 3 oder dgl. miteinander verbunden sind. Über das aus Metall bestehende Stützelement 1 ist ein aus mindestens zwei Teilen bestehendes Kunststoffhohlprofil 4 geklipst oder geschoben, während über das Stützelement 2 ein Kunststoffhohlprofil geschoben oder geklipst ist.

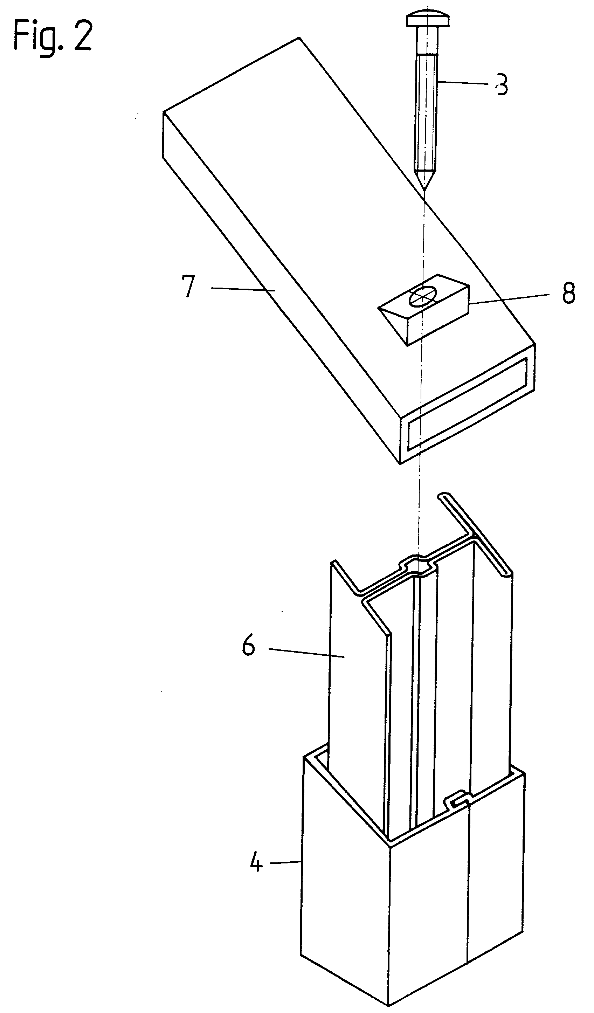

Die Anordnung kann beliebig variiert werden und anstelle der sich aus der Abbildung ergebenden rechtwinkeligen auch schiefwinklige Rahmenanordnungen hergestellt werden oder auch beispielsweise Geländerkonstruktionen, die mit aufgeklipsten Kunststoffprofilen, Handläufe etc. ummantelt sind. Die in Fig. 2 dargestellte schiefwinkelige Rahmen- oder Geländerkonstruktion besteht aus einem einstückigen Stützelement 6, dessen Oberkante schräg verläuft und ebenfalls mit einem aufgeklipsten Kunststoffhohlprofil 4 ummantelt ist. Das zweite Stützelement 7 kann beispielsweise ein Geländeroberteil sein, das mit einem Handlauf verkleidet wird und mit der Schraube 3 mit dem Stützelement 6 verbunden wird. Zwischen der Oberfläche des Stützelementes 7 und dem Kopf der Schraube 3 ist ein Keil 8 geschaltet, der die Neigung zum Schraubkanal im Stützelement 6 ausgleicht.

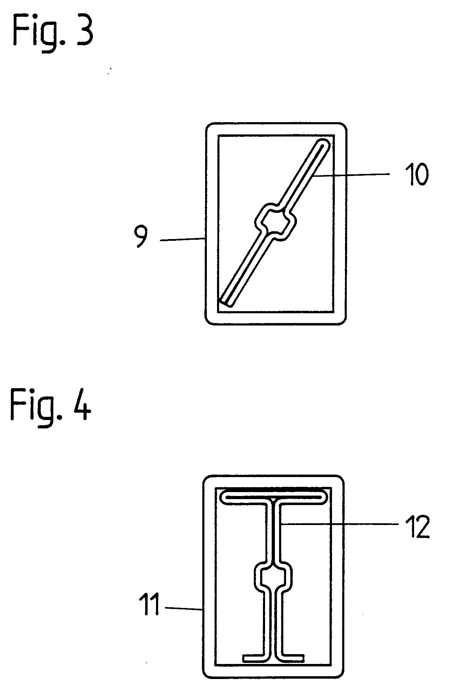

Die Figuren 3 und 4 zeigen weitere Ausführungsvarianten von auf die Stützelemente 10 bzw. 12 geschobene Kunststoffhohlprofile 4 oder dergl. 9 und 11.
Die Stützelemente 1,6,10 und 12 müssen dabei die Hohlkammern der Ummantelungen nicht ausfüllen. Sie werden durch die Verschraubung gehalten. Das einstückig ausgebildete Stützelement kann beispielsweise derart ausgebildet sein, daß es in bekannter Weise aus einem Blechprofil mit zwei parallelen Schenkeln 1a und 1b und einem aus diesen Schenkeln ausgebildeten Schraubkanal 1c besteht der zur offenen Seite hin in einen Formspalt übergeht. Dieses Blechprofil 1 kann an mindestens einem der parallelen Schenkel mit einem Falz 1d versehen sein, es kann an beiden Seiten mit Falzen 1e unterschiedlicher Länge vorgesehen sein. Es können die Falze auch völlig entfallen, wie in Fig. 3 dargestellt. Ein Abstützen der Falze 1d und 1e an den Wänden der Hohlkammern, aufgeklipsten Ummantelungen usw. ist nicht notwendig, denn das Stützelement 1,6,10 und 12 wird mit dem Stützelement 2 bzw. 7 durch die Schrauben 3 verspannt.

## Patentansprüche

1. Metallrahmen zur Herstellung von Kunststoff-Fenstern, -Flügeln, -Türen, -Kasten- und Erkerfenstern, Geländern usw. unter Verwendung eines einstückigen, zweischenkeligen mit mindestens einem Schraubkanal ausgerüsteten Stützelementes, **dadurch gekennzeichnet**, daß das Stützelement (1) mit weiteren Stützelementen (1) oder (2) mittels eines Verbindungselementes (3) zu einem Rahmen verbunden ist und Kunststoffprofile (4) oder Kunststoffhohlprofile (5) als Ummantelung auf die Stützprofile (1,2) aufgeklipst bzw. aufgeschoben sind.

2. Metallrahmen nach Anspruch 1, **dadurch gekennzeichnet,** daß das Stützprofil (1) ohne Kopf- und Fußfalze (1d,1e) ausgebildet ist.

3. Metallrahmen nach Anspruch 1, **dadurch gekennzeichnet,** daß die Fußfalze (1d) und die Kopffalze (1e) unterschiedliche Länge aufweisen.

4. Metallrahmen nach Anspruch 1 bis 3, **dadurch gekennzeichnet**, daß die Stützelemente (1,2) schiefwinkelig miteinander verbunden sind.
